# EUROPÄISCHE PATENTSCHRIFT

(11) **EP 2 147 214 B1**
(45) Veröffentlichungstag und Bekanntmachung des Hinweises auf die Patenterteilung: **25.05.2011**
(21) Anmeldenummer: 08735245.6
(22) Anmeldetag: 15.04.2008
(51) Int. Cl.: F04D 13/06, F04D 29/046, F04D 29/02, F04D 29/063, F16C 33/08, F16C 35/02

(54) **LAGERTRÄGER AUS STAHLDRAHTGESTRICK FÜR EINE SPALTROHRPUMPE**
BEARING CARRIER MADE OF STEEL WIRE FABRIC FOR A SEPARATING PIPE PUMP
SUPPORT DE PALIER COMPOSÉ D'UN TREILLIS DE FILS D'ACIER POUR UNE POMPE À MOTEUR À GAINE

(30) Priorität: 22.05.2007 DE 102007023779
(43) Veröffentlichungstag der Anmeldung: 27.01.2010
(73) Patentinhaber: WILO SE, 44263 Dortmund (DE)
(72) Erfinder: ADLER, Andreas, 58640 Iserlohn (DE)
(74) Vertreter: COHAUSZ DAWIDOWICZ HANNIG & SOZIEN
(86) Internationale Anmeldenummer: PCT/EP2008/002978
(87) Internationale Veröffentlichungsnummer: WO 2008/141703

(56) Entgegenhaltungen:
- DE-A1- 19 701 178
- DE-U1- 9 217 976
- GB-A- 658 907
- US-A- 5 397 220

## Beschreibung

Die Erfindung betrifft einen Lagerträger für einen vorderen, dem Pumpenlaufrad zugewandten Bereich eines Spalttopfes oder Spaltrohres einer Kreiselpumpe, wie z.B. aus dem Dokument DE 9 217 976 U bekannt ist.

Um die Pumpen- und Motorenwelle einer Kreiselpumpe in deren Spalttopf oder Spaltrohr zu lagern, ist es bekannt, im Spaltrohr eingangsseitig einen Lagerträger mit einem Außenring aus Sinterbronze einzupressen, der einen Filterring umfasst, in dem ein Radiallager aus Kohlegraphit einliegt. Eine solche Konstruktion ist verhältnismäßig aufwendig in Herstellung und Montage.

Aufgabe der Erfindung ist es, einen Lagerträger der eingangs genannten Art so zu verbessern, dass er bei einfacher Montage und Herstellung weniger Teile aufweist.

Diese Aufgabe wird erfindungsgemäß dadurch gelöst, dass der buchsenförmige Lagerträger ausschließlich aus einem gepressten Drahtgestrick aus Edelstahl besteht, das als Filterring das Radiallager der Motorenwelle umgibt.

Mit nur einem Teil in Form eines zu einer Buchse gepressten Drahtgestrickes wird sowohl die Funktion des Stützens und Zentrierens des Radiallagers als auch die Funktion des Filterns erreicht. Es wird somit ein Teil weniger benötigt und eine mechanische Bearbeitung entfällt. Auch sind eine einfache Montage und eine kostengünstige Herstellung gegeben. Ferner ist von Vorteil, dass der Lagerträger frei von Buntmetallen ist, so dass eine mit einem solchen Lagerträger versehene Pumpe auch für Trinkwasser verwendet werden kann.

Besonders vorteilhaft ist hierbei, dass das Drahtgestrick aus rostfreiem Stahl besteht. Vorzugsweise wird vorgeschlagen, dass der Lagerträger in die vordere Spalttopf- oder Spaltrohröffnung ohne umgebende(s) Zwischenteil(e) einpressbar ist. Ferner ist gegeben, dass in den Lagerträger das Radiallager einpressbar ist.

Besonders vorteilhaft ist es, dass Form und Verfestigung des Lagerträgers durch einen Pressvorgang erfolgt. Als erheblichen Vorteil ist anzusehen, dass der Lagerträger mit seinem Außenumfang in direktem Kontakt mit der Innenwand des Spalttopfes bzw. Spaltrohres ist.

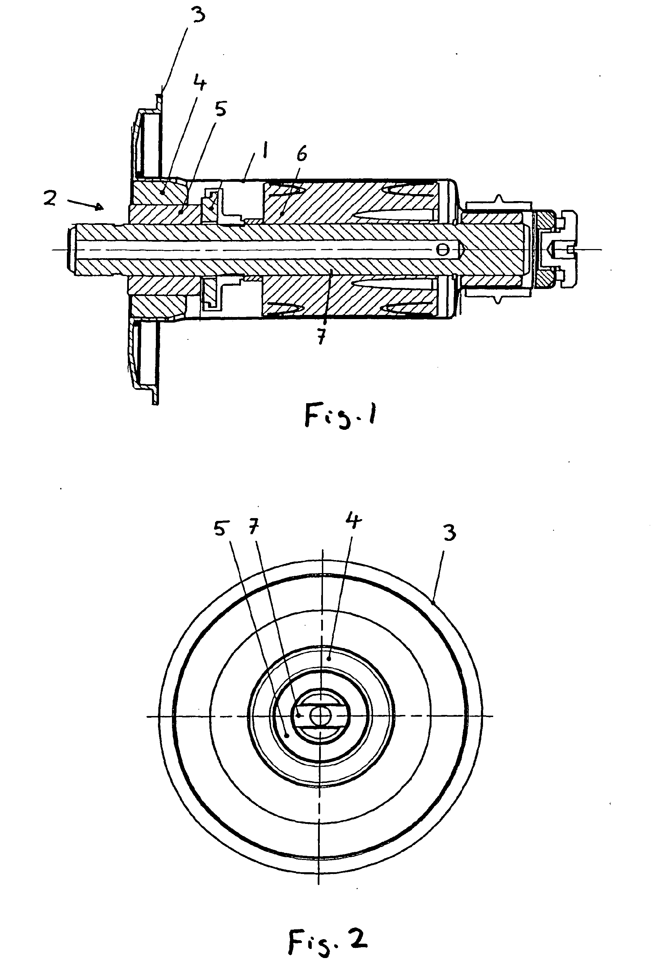

Ein Ausführungsbeispiel der Erfindung ist in den Zeichnungen dargestellt und wird im Folgenden näher beschrieben. Es zeigen
- Fig. 1: eine Vorderansicht eines Spalttopfes mit eingesetztem Radiallager und Lagerträger,
- Fig. 2: einen axialen Längsschnitt durch einen Spalttopf mit Radiallager und Lagerträger.

Ein Spalttopf 1 mit vorderem, die Spalttopfeingangsöffnung 2 umgebenden flanschförmigen Schild 3 ist zum Einbau in eine nicht dargestellte Kreiselpumpe vorgesehen, um im Spalttopf den Rotor 6 des Elektromotors mit seiner Rotorwelle 7 zu lagern, der die Pumpe antreibt. In der der Pumpenkammer zugewandten Öffnung 2 des Spalttopfes 1 ist ein buchsenförmiger Filterring 4 eingepresst, der aus einem Edelstahldrahtgestrick in die Buchsenform gepresst und verfestigt ist. Innerhalb des Filterrings 4 ist ein buchsenförmiges Radiallager 5 aus Kohlegraphit eingepresst, wobei Filterring 4 und Radiallager 5 koaxial zur Motoren- und Pumpenwelle sowie zur Achse des Spalttopfes 1 angeordnet sind.

Der buchsenförmige Filterring 4 liegt damit außenseitig direkt an der Innenwand des Spaltrohres bzw. des Spalttopfes 1 an, so dass ein Außenring zwischen Filterring 4 und Innenwand des Spalttopfes 1 sich erübrigt.

Durch Variation der Drahtstärke kann das Durchströmverhalten variiert werden und somit das Kühlverhalten der Nassläuferpumpe beeinflusst werden.

## Patentansprüche

1. Lagerträger (4) für einen vorderen, dem Pumpenlaufrad zugewandten Bereich eines Spalttopfes (1) oder Spaltrohres einer Kreiselpumpe, **dadurch gekennzeichnet, dass** der buchsenförmige Lagerträger (4) ausschließlich aus einem gepressten Drahtgestrick besteht, das als Filterring das Radiallager (5) der Motorenwelle umgibt.

2. Lagerträger nach Anspruch 1, **dadurch gekennzeichnet, dass** das Drahtgestrick aus rostfreiem Stahl oder Sinterbronze besteht.

3. Lagerträger nach Anspruch 1 oder 2, **dadurch gekennzeichnet, dass** er in die vordere Spalttopf- oder Spaltrohröffnung (2) ohne umgebende(s) Zwischenteil(e) einpressbar ist.

4. Lagerträger nach einem der vorherigen Ansprüche, **dadurch gekennzeichnet, dass** in ihn das Radiallager (5) einpressbar ist.

5. Lagerträger nach einem der vorherigen Ansprüche, **dadurch gekennzeichnet, dass** seine Form und Verfestigung durch einen Pressvorgang erfolgt.

6. Spalttopf (1) oder Spaltrohr einer Kreiselpumpe mit einem Lagerträger (4) nach einem der vorherigen Ansprüche, **dadurch gekennzeichnet, dass** der Lagerträger (4) mit seinem Außenumfang in direktem Kontakt mit der Innenwand des Spalttopfes (1) bzw. Spaltrohres ist.

## Claims

1. Bearing carrier (4) for a front area of a containment shell (1) or separating pipe of a centrifugal pump turned towards the impeller, **characterised in that** the bushing shaped bearing carrier (4) consists exclusively of a pressed wire mesh, which surrounds the radial bearing (5) of the engine shaft as a filter ring.

2. Bearing carrier according to claim 1, **characterised in that** the wire mesh consists of stainless steel or sintered bronze.

3. Bearing carrier according to claim 1 or 2, **characterised in that** it may be pressed into the front containment shell or separating pipe opening (2) without surrounding intermediate part(s).

4. Bearing carrier according to one of the previous claims, **characterised in that** the radial bearing (5) may be pressed into it.

5. Bearing carrier according to one of the previous claims, **characterised in that** it is shaped and compacted through a pressing process.

6. Containment shell (1) or separating pipe of a centrifugal pump with a bearing carrier (4) according to one of the previous claims, **characterised in that** the bearing carrier (4) is in direct contact with the inner wall of the containment shell (1) or separating pipe with its external circumference.

## Revendications

1. Support de palier (4) pour une zone avant, tournée vers le rotor de pompe, d'un pot fendu (1) ou tube fendu d'une pompe centrifuge, **caractérisé en ce que** le support de palier (4) en forme de manchon est constitué exclusivement d'un treillis de fils d'acier pressé, qui entoure sous forme d'anneau de filtrage le palier radial (5) de l'arbre du moteur.

2. Support de palier suivant la revendication 1, **caractérisé en ce que** le treillis de fils d'acier se compose d'acier inoxydable ou de bronze fritté.

3. Support de palier suivant l'une des revendications 1 et 2, **caractérisé en ce qu'**il peut être pressé dans l'ouverture avant (2) du pot fendu ou du tube fendu sans pièce(s) intermédiaire(s) d'enveloppement.

4. Support de palier suivant l'une des revendications précédentes, **caractérisé en ce que** le palier radial (5) peut y être pressé.

5. Support de palier suivant l'une des revendications précédentes, **caractérisé en ce que** sa forme et sa consolidation s'effectuent par une opération de compression.

6. Pot fendu (1) ou tube fendu d'une pompe centrifuge comprenant un support de palier (4) suivant l'une des revendications précédentes, **caractérisé en ce que** le support de palier (4) est au contact direct, par son pourtour extérieur, de la paroi intérieure du pot fendu (1) ou du tube fendu.
